# EUROPÄISCHE PATENTSCHRIFT

(11) **EP 2 413 157 B1**
(45) Veröffentlichungstag und Bekanntmachung des Hinweises auf die Patenterteilung: **20.01.2016**
(21) Anmeldenummer: 11168628.3
(22) Anmeldetag: 03.06.2011
(51) Int. Cl.: G01S 7/40, G01S 13/93

(54) **Radarsensor und Verfahren zur Steuerung desselben**
Radar sensor and method for controlling the same
Capteur radar et procédé de commande de celui-ci

(30) Priorität: 29.07.2010 DE 102010032705
(43) Veröffentlichungstag der Anmeldung: 01.02.2012
(73) Patentinhaber: Robert Bosch GmbH, 70442 Stuttgart (DE)
(72) Erfinder: Hildebrandt, Juergen, 73235 Weilheim (DE); Breuing, Holger, 74360 Ilsfeld (DE); Mahler, Michael, 70771 Leinfelden-Echterdingen (DE)

(56) Entgegenhaltungen:
- WO-A1-2009/115343
- DE-A1-102004 017 720

## Beschreibung

Die Erfindung betrifft ein Verfahren mit den Merkmalen von Anspruch 1 zum Steuern eines Radarsensors und einen Radarsensor mit den Merkmalen des Anspruchs 9.

### Stand der Technik

Ein Radarsensor wird an Bord eines Kraftfahrzeugs verwendet, um ein Objekt im Bereich um ein Kraftfahrzeug zu erfassen und gegebenenfalls dessen Bewegung bezüglich des Kraftfahrzeugs zu bestimmen. Beispielsweise kann der Radarsensor in Kombination mit einem automatischen Geschwindigkeits-Konstanthaltern ("Tempomat") eingesetzt werden, um zu verhindern, dass das Kraftfahrzeug während einer automatischen Geschwindigkeitsregleung auf ein vorausfahrendes Fahrzeug auffährt. Eine andere Anwendung finden Radarsensoren im Bereich von Kraftfahrzeugen zur Unterstützung eines Einparkvorgangs, wobei ein Signal an einen Fahrer ausgegeben wird, wenn sich das Kraftfahrzeug näher als eine vorbestimmte Entfernung an ein Objekt annähert.

Für präzise Messungen mittels eines Radarsensors, insbesondere bei langen Entfernungen und hohen Geschwindigkeiten des Kraftfahrzeugs, ist es häufig erforderlich, eine vom Radarsensor abgestrahlte Energiemenge zu dosieren.

DE 10 2004 017 720 A1 betrifft ein Radarsensorsystem, das dazu vorgesehen ist, die Sendeleistung des Radarsignals adaptiv in Abhängigkeit des tatsächlichen Abstandes zu einem nächstgelegenen Objekt zu steuern.

DE 197 07 936 A1 zeigt ein optisches Entfernungsmessgerät zum Einsatz in einem Kraftfahrzeug, wobei eine Sendeleistung ausgesandten Lichts in Abhängigkeit einer Fahrgeschwindigkeit des Kraftfahrzeugs gesteuert wird.

US 5,670,962 zeigt ein Radarsystem zum Einsatz in einem Kraftfahrzeug, wobei Radarantennen, die in unterschiedlichen geometrischen Ausrichtungen am Kraftfahrzeug angebracht sind, in Abhängigkeit eines Geschwindigkeitssignals und eines Rückfahrsignals aktiviert bzw. deaktiviert werden.

Der Erfindung liegt die Aufgabe zugrunde, einen Radarsensor und ein Verfahren zur Steuerung des Radarsensors anzugeben, so dass eine radiologische Gefährdung durch ausgesandte Radarstrahlung minimiert wird.

### Offenbarung der Erfindung

Die Erfindung löst dieses Problem mittels eines Verfahrens mit den Merkmalen des Anspruchs 1 und eines Radarsensors mit den Merkmalen des Anspruchs 9. Unteransprüche geben bevorzugte Ausführungsformen wieder.

Ein erfindungsgemäßes Verfahren zum Steuern eines Radarsensors umfasst Schritte des Erfassens eines Objekts mittels des Radarsensors und des Bestimmens einer Entfernung des Objekts vom Radarsensor. Dabei wird die durch das Objekt aufgenommene Strahlungsenergie auf der Basis einer vom Radarsensor abgestrahlten Strahlungsenergie und eines Abstands des Objekts vom Radarsensor bestimmt und mit einem vorbestimmten Schwellenwert verglichen. Die vom Radarsensor abgestrahlte Strahlungsenergie wird durch Anpassen von Parametern, die einen Einfluss auf die Energie des abgestrahlten Radarsignals haben, in Abhängigkeit der bestimmten Entfernung derart gesteuert, dass die von dem Objekt ausgenommene Strahlungsenergie des Radarsensors unterhalb des vorbestimmten Schwellenwerts bleibt.

Im Unterschied zu anderen Ansätzen, in denen die vom Radarsensor abgestrahlte Strahlungsenergie bezüglich eines Messergebnisses optimiert wird, kann durch die erfindungsgemäße Herangehensweise verhindert werden, dass eine Person im Bereich des Kraftfahrzeugs durch die vom Radarsensor abgestrahlte Strahlungsenergie gesundheitlich gefährdet wird.

Unterschiedliche Ausführungsformen der Erfindung betreffen hauptsächlich entweder die Bestimmung der vom Objekt aufgenommenen Strahlungsenergie oder die Beeinflussung des Radarsensors, um die Menge der abgestrahlten Strahlungsenergie zu steuern.

Der Vergleich der vom Objekt aufgenommenen Strahlungsenergie mit dem Schwellenwert ist insbesondere dann vorteilhaft, wenn in unterschiedlichen Betriebszuständen des Radarsensors unterschiedliche Mengen Strahlungsenergie abgestrahlt werden.

Die vom Objekt aufgenommene Strahlungsenergie kann als Mittelwert über eine vorbestimmte Zeitspanne bestimmt werden. Personenschutz-Grenzwerte für elektromagnetische Radarstrahlung definieren Mittelwerte, die über Zeitintervalle von bis zu sechs Minuten ermittelt werden. Dabei wird häufig festgelegt, welche Erwärmung durch die elektromagnetische Radarstrahlung im Zeitintervall pro Kilogramm Körpergewebe der Person tolerierbar ist. Durch Bilden des Mittelwerts über das vorbestimmte Zeitintervall können beispielsweise kurzfristig relativ große Energiemengen abgestrahlt werden, ohne den Mittelwert über den vorbestimmten Schwellenwert anwachsen zu lassen.

Eine vom Radarsensor abgestrahlte Strahlungsenergie kann auf der Basis einer in eine Radarantenne eingespeisten Energie und einer Charakteristik der Radarantenne bestimmt werden. Es können auch noch weitere Parameter des Radarsensors berücksichtigt werden, etwa eine Modulation des Radarsignals. Die Charakteristik der Radarantenne kann insbesondere einen Antennengewinn bzw. eine Antennenverstärkung umfassen. Eine steuerbare Antenne kann beispielsweise bezüglich eines Öffnungswinkels und einer abgestrahlten Leistung variabel betrieben werden, so dass stets die tatsächlich vom Radarsensor abgestrahlte Strahlungsenergie berücksichtigt werden kann. Die Betriebszustände des Radarsensors sind für die Steuerung der Strahlungsenergie im Sensor selber immer bekannt.

Der Radarsensor kann mehrere Radarantennen mit teilweise überlappenden Sendebereichen umfassen und die vom Objekt aufgenommene Strahlungsenergie kann bezüglich aller Radarantennen bestimmt werden. So können vorteilhafterweise die am Objekt eintreffenden, überlagerten Radarwellen aller Radarantennen berücksichtigt werden. Die Anordnung der Radarantennen kann bei der Ermittlung der Grenzwerte und der Steuerung berücksichtigt werden. Bei einer festen Installation der Radarantennen ist deren Anordnung bekannt und kann z.B. durch eine vorausgehende Kalibrierung berücksichtigt werden. Sollte die Anordnung der Radarantennen veränderlich sein, wie beispielsweise bei einem Einsatz der Radarsensoren zur Ladungssicherung an einem Lastkraftwagen, können Informationen über die Ausrichtung und/oder Fokussierung der Radarsensoren bei der Bestimmung der am Objekt eintreffenden Radarwellen bzw. deren Strahlungsenergie berücksichtigt werden. Zur Erhebung der Ausrichtungs- bzw. Fokussierungsinformationen kann ein Trackingsystem auf Basis eines ultrabreitbandigen ("ultra wide band", UWB) oder schmalbandigen RFID Systems ("Radio Frequency Identification System") eingesetzt werden.

Die vom Radarsensor abgestrahlte Strahlungsenergie kann in Abhängigkeit einer Geschwindigkeit des Objekts bezüglich des Radarsensors gesteuert werden. Ein Objekt, das sich voraussichtlich bald aus einem Bereich des Radarsensors entfernt, kann etwa mit einer höheren abgestrahlten Strahlungsenergie belastet werden, ohne den Schwellenwert zu überschreiten.

Zur Steuerung der vom Radarsensor abgestrahlten Strahlungsenergie kann ein Parameter einer vom Radarsensor verwendeten Signalmodulation gesteuert werden. Beispielsweise kann ein Tastverhältnis eines gepulst betriebenen Radarsensors verändert werden, um die abgestrahlte Strahlungsenergie zu erhöhen oder zu verringern.

Der Radarsensor kann eine steuerbare Radarantenne umfassen und die vom Radarsensor abgestrahlte Strahlungsenergie kann durch Steuern der Radarantenne gesteuert werden. Eine solche Radarantenne kann eine sogenannte aktive Radarantenne sein, bei der Charakteristika wie eine Ausrichtung, ein Öffnungswinkel, eine Elevation, eine Verstärkung und gegebenenfalls noch weitere Parameter verändert werden können.

Ein Computerprogrammprodukt umfasst Programmcodemittel zur Durchführung des beschriebenen Verfahrens, wenn es auf einer Verarbeitungseinrichtung abläuft.

Ein erfindungsgemäßer Radarsensor umfasst eine Hochfrequenzquelle zur Erzeugung einer Schwingung, eine Radarantenne zum Aussenden elektromagnetischer Strahlung auf der Basis der erzeugten Schwingung und zum Empfangen eines Echos der ausgesandten elektromagnetischen Strahlung sowie eine Steuereinrichtung, die dazu eingerichtet ist, die Hochfrequenzquelle und/oder die Radarantenne mittels des beschriebenen Verfahrens zu steuern.

### Kurze Beschreibung der Figuren

Die Erfindung wird nun mit Bezug auf die beigefügten Figuren genauer beschrieben, in denen:
Figur 1 eine schematische Darstellung eines Radarsensors; und
Figur 2 ein Ablaufdiagramm eines Verfahrens zur Steuerung des Radarsensors von Figur 1
darstellt.

### Genaue Beschreibung eines Ausführungsbeispiels

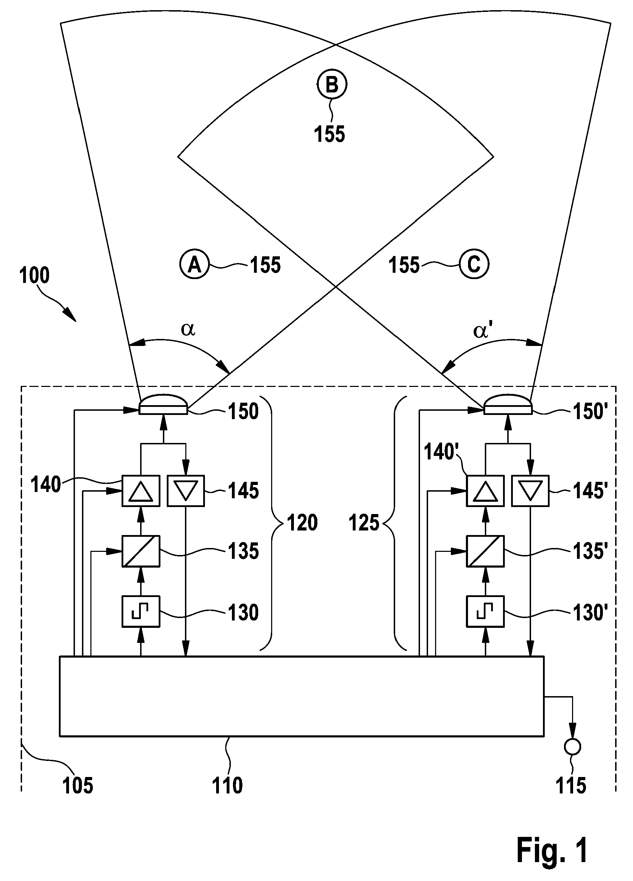

Figur 1 zeigt eine schematische Darstellung eines Radarsensors 100 an Bord eines Kraftfahrzeugs 105. Der Radarsensor 100 umfasst eine Steuerungseinrichtung 110, die mit einer Schnittstelle 115 zum Austausch von Messinformationen verbunden ist.

Ferner umfasst der Radarsensor 100 eine erste Radareinheit 120 und eine dazu identisch aufgebaute zweite Radareinheit 125. In einer alternativen Ausführungsform ist nur die erste Radareinheit 120 vorgesehen, die zweite Radareinheit 125 entfällt. Die erste Radareinheit 125 umfasst eine Hochfrequenzquelle 130 zur Bereitstellung einer Schwingung mit einer für Radaranwendungen geeigneten Frequenz. Diese Frequenz kann je nach Ausführungsform des Radarsensors 100 in einem vorbestimmten Frequenzband im Bereich zwischen 3 GHz und 300 GHz liegen. Für besondere Anwendungsfälle kann die Frequenz auch ein einem niedrigeren Frequenzbereich liegen, etwa zwischen 30 und 300 MHz. Die Hochfrequenzquelle 130 kann durch die Steuerungseinrichtung 110 gesteuert werden, indem sie beispielsweise aktiviert oder deaktiviert wird oder die von der Hochfrequenzquelle 130 bereitgestellte Schwingung in ihrer Frequenz beeinflusst wird.

Die durch die Hochfrequenzquelle 130 erzeugte Schwingung wird einem Modulator 135 bereitgestellt, um ein sendefähiges Signal zu generieren. Es sind unterschiedliche Modulationsformen möglich, beispielsweise eine Frequenz- oder Phasenmodulation. In einem anderen Ausführungsbeispiel kann der Modulator 135 auch entfallen. Der Modulator 135 kann durch die Steuerungseinrichtung 110 gesteuert werden, beispielsweise bezüglich einer aufmodulierten Frequenz.

Das vom Modulator 135 bereitgestellte modulierte Signal wird an einen Ausgangsverstärker 140 weitergeleitet. Der Ausgangsverstärker 140 verstärkt das modulierte Signal derart, dass es über eine Antenne 150 abgestrahlt werden kann. Dabei ist ein Verstärkungsfaktor des Ausgangsverstärkers 140 durch die Steuerungseinrichtung 110 steuerbar.

Über die Antenne 150 wird das vom Ausgangsverstärker 140 bereitgestellte Signal abgestrahlt. Die Antenne 150 ist ebenfalls durch die Steuerungseinrichtung 110 steuerbar, beispielsweise bezüglich eines Öffnungswinkels α von ausgesandter Radarstrahlung oder eines Elevationswinkels. Sowohl die Hauptabstrahlrichtung der Antenne 150 in horizontaler und vertikaler Richtung, als auch der Öffnungswinkel α können in einer weiteren Ausführungsform durch phasenverschobene Ansteuerung mehrerer Antennen 150 oder durch tatsächliche Bewegung der Antennen 150 durch die Steuerungseinrichtung 150 einstellbar sein.

Die Antenne 150 ist auch mit einem Eingangsverstärker 145 verbunden, der Radarsignale, die mittels der Antenne 150 empfangen wurden, in ein verarbeitbares elektrisches Signal umsetzt, welches der Steuerungseinrichtung 110 bereitgestellt wird. Der Eingangsverstärker 145 kann ebenfalls durch die Steuerungseinrichtung 110 steuerbar sein, beispielsweise bezüglich eines Verstärkungsfaktors. Die zweite Radareinheit 125 ist entsprechend der ersten Radareinheit 120 aufgebaut. Die Funktionsblöcke der zweiten Radareinheit 125 tragen die gleichen Bezugszeichen wie die korrespondierenden Funktionsblöcke der ersten Radareinheit 115 und sind mit einem Strich (') versehen.

Die Abstrahlrichtungen der Antennen 150 und 150' sind so orientiert, dass sich die Abstrahlbereiche der beiden Antennen 150 und 150' teilweise überlappen. Ein Objekt 155 kann sich an einer Position A befinden, an der es nur im Abstrahlbereich der Antenne 150 liegt, an einer Position B, an der es im überlappenden Abstrahlbereich der Antennen 150 und 150' liegt, oder an einer Position C, an der es nur im Abstrahlbereich der Antenne 150' liegt. In einer Ausführungsform mit nur einer Radareinheit 125 liegen alle Positionen A, B und C im gleichen Abstrahlbereich und müssen diesbezüglich nicht unterschiedlich behandelt werden.

Das Objekt 155 wird mittels des Radarsensors 100 erfasst, indem Radarsignale mittels der Antennen 150 und 150' auf das Objekt 155 gestrahlt werden, welches diese teilweise reflektiert. Die reflektierten Radarsignale werden mit den Antennen 150 bzw. 150' aufgefangen und in elektrische Signale umgewandelt, die dann von der Steuerungseinrichtung 110 ausgewertet werden. Das Objekt 155 wird durch die Steuerungseinrichtung 110 auf der Basis der verarbeiteten, reflektierten Signale (Echos) erfasst. Dabei kann mit unterschiedlichen Signalformen, unterschiedlichen Frequenzen, unterschiedlichen Modulationen und mit einer oder mehreren Radareinheiten 120, 125 vorgegangen werden.

Ein Abstand des Objekts 155 von den Antennen 150 bzw. 150' kann in unterschiedlichen Ausführungsformen auf der Basis einer Frequenzüberlagerung des ausgesandten Radarsignals mit dem vom Objekt 155 reflektierten Radarsignal oder über eine Zeitdifferenz zwischen dem Aussenden des Radarsignals und dem Eintreffen des reflektierten Radarsignals bestimmt werden. Ferner kann eine Geschwindigkeit des Objekts 155 bezüglich der Antennen 150 bzw. 150' bestimmt werden, indem die Entfernung des Objekts 155 von den Antennen 150, 150' über eine vorbestimmte Zeit beobachtet wird oder indem eine Frequenzverschiebung zwischen dem ausgesandten Radarsignal und dem reflektierten Radarsignal ausgewertet wird (Doppler-Effekt).

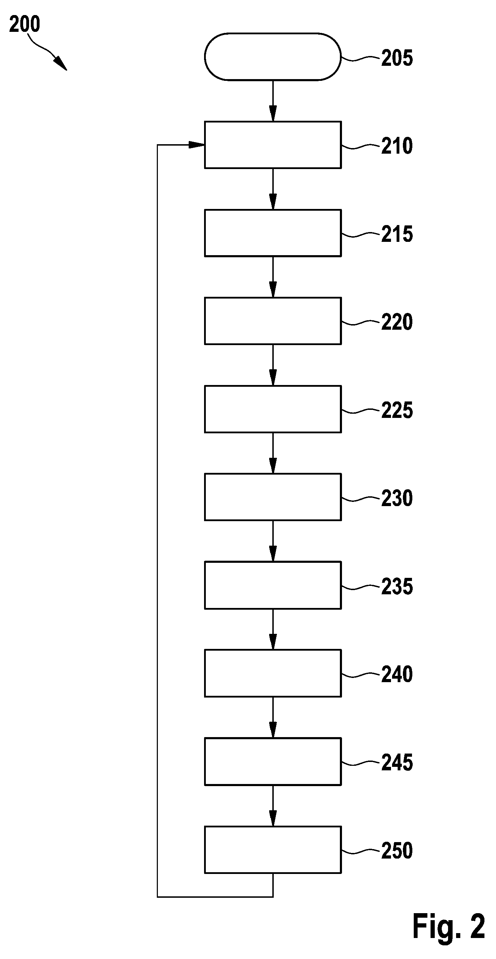

Figur 2 zeigt ein Ablaufdiagramm eines Verfahrens 200 zur Steuerung des Radarsensors 100 aus Figur 1. Das Verfahren 200 kann für eine beliebige Anzahl von Radareinheiten 120, 125 und beliebige Radar-Signalformen an den Antennen 150, 150' verwendet werden.

In einem ersten Schritt 205 befindet sich das Verfahren 200 im Startzustand. Anschließend wird in einem Schritt 210 mittels der Antennen 150, 150' ein elektromagnetisches Radarsignal ausgesandt. Das Radarsignal läuft von den Antennen 150, 150' zum Objekt 155. Ein Teil des am Objekt 155 eintreffenden Radarsignals wird reflektiert und an die Antennen 150, 150' zurückgeworfen. In einem Schritt 215 wird das reflektierte Radarsignal empfangen. Die Schritte 215 und 220 können sich in einigen Ausführungsformen des Radarsensors 100 auch teilweise oder vollständig überlappen.

Auf der Basis des ausgesandten und des reflektierten Radarsignals wird im Schritt 220 das Objekt 155 bestimmt. In einem Schritt 225 werden die Abstände des Objekts 155 von den Antennen 150, 150' bestimmt. Üblicherweise werden gleichzeitig die Bewegungsrichtungen und -geschwindigkeiten des Objekts 155 bezüglich der Antennen 150, 150' bestimmt, beispielsweise anhand eines Dopplersignals. Im vorliegenden Zusammenhang ist jedoch hauptsächlich der Abstand des Objekts 155 von Interesse.

In einem Schritt 230 wird die mittels der Antennen 150, 150' ausgesandte Strahlungsenergie bestimmt. Die ausgesandte Strahlungsenergie ist abhängig von einer von der Antenne 150, 150' absorbierten elektrischen Energie und einem Antennengewinn, der ein Verhältnis zwischen aufgenommener elektrischer Energie und abgestrahlter Strahlungsenergie angibt. Die Radarstrahlung wird in unterschiedlichen Richtungen unterschiedlich stark abgestrahlt, wobei eine Antennencharakteristik angibt, wie die Signalstärke über die Richtungen verteilt ist. Eine horizontale und eine vertikale Richtung können in unterschiedlichen Antennencharakteristiken angegeben sein.

In einem Schritt 235 wird die vom Objekt 155 aufgenommene Strahlungsenergie bestimmt. Hierfür wird bestimmt, welche Strahlungsenergie in Richtung des Objekts 155 abgestrahlt wurde und wie groß der Abstand des Objekts 155 von den Antennen 150, 150' ist, um die Strahlungsdispersion zu berücksichtigen. Es kann auch bestimmt werden, welcher Anteil der am Objekt 155 eintreffenden Radarstrahlung vom Objekt 155 zurückgeworfen wurde, statt von ihm aufgenommen zu werden. Diese Bestimmung kann auf der Basis des empfangenen Echos erfolgen.

Im Fall von mehreren Radareinheiten 120, 125 kann anhand von Richtung und Entfernung des Objekts 155 auch bestimmt werden, von welchen Antennen 150, 150' abgestrahlte Radarsignale überhaupt beim Objekt 155 eintreffen und in welcher Stärke, so dass die Summe der vom Objekt aufgenommenen Radarstrahlung berücksichtigt werden kann.

In einem Schritt 240 wird die vom Objekt 155 aufgenommene Strahlungsenergie, die in Schritt 235 bestimmt wurde, über einen vorbestimmten Zeitraum integriert. Geltende Strahlungsschutz-Vorschriften schreiben die Einhaltung eines Grenzwerts vor, der einer Energiemenge entspricht, die während einer Zeit von bis zu sechs Minuten in das Objekt 155 eindringen, falls es sich beim Objekt 155 um einen Menschen handelt. Beim Integrieren über den vorbestimmten Zeitraum von beispielsweise sechs Minuten wird auch die konkrete Signalform des Radarsignals berücksichtigt, das durch die Antennen 150, 150' abgestrahlt wird. Handelt es sich beispielsweise um ein gepulstes Signal, so wird während der Pulspausen kein Radarsignal über die Antennen 150, 150' abgestrahlt, so dass zu diesen Zeiten auch kein Radarsignal vom Objekt 155 aufgenommen wird.

In einem Schritt 245 wird der im Schritt 240 bestimmte Durchschnittswert mit einem vorbestimmten Schwellenwert verglichen. Dieser Schwellenwert kann beispielsweise die erwähnte, maximal zulässige Strahlenbelastung auf ein Lebewesen, etwa einen Menschen sein. In Abhängigkeit des Vergleichs werden in einem Schritt 250 Parameter der Radareinheiten 120, 125 des Radarsensors 100 angepasst, die einen Einfluss auf die Energie des abgestrahlten Radarsignals haben. Beispielsweise kann eine Amplitude bzw. eine Verstärkung des ausgesandten Radarsignals verringert werden oder eine Modulation des Radarsignals kann verändert werden. In weiteren Beispielen können ein Impuls-Pause-Verhältnis verkleinert werden, bei einem Signal mit wechselnden Sendefrequenzen ("frequency hopping" / "frequency stepping") kann die Folge der verwendeten Frequenzen beeinflusst werden, eine hauptsächlich verwendete Frequenz kann verändert werden oder gepulste Signale können seltener ausgesandt werden.

Die ergriffenen Maßnahmen zur Reduzierung der ausgesandten Strahlungsenergie können temporär sein, so dass der vorbestimmte Schwellenwert für den jeweils aktuellen Messzeitraum nicht überschritten wird. Verlässt das Objekt 155 den Messbereich, so können die Maßnahmen zur Verringerung der abgestrahlten Energie sofort oder nach Ablauf einer vorbestimmten Zeit aufgehoben werden. Die vorbestimmte Zeit kann der Hälfte der Integrationszeit entsprechen.

Die Erfindung kann grundsätzlich für jede Art von Radarsensor verwendet werden. Insbesondere können Kraftfahrzeuge aller Art, etwa Personen- oder Lastkraftwagen, Schiffe oder Flugzeuge mit einem erfindungsgemäßen Radarsensor ausgestattet sein.

## Patentansprüche

1. Verfahren (200) zum Steuern eines Radarsensors (100), folgende Schritte umfassend:
- Erfassen (220) eines Objekts (155) mittels des Radarsensors (100);
- Bestimmen (225) einer Entfernung des Objekts (155) vom Radarsensor (100);
- Anpassen (250) von Parametern des Radarsensors (100), die einen Einfluss auf die Energie des abgestrahlten Radarsignals haben, um die abgestrahlte Strahlungsenergie in Abhängigkeit der bestimmten Entfernung derart zu steuern (250), dass eine von dem Objekt (155) aufgenommene Strahlungsenergie des Radarsensors (100) unterhalb eines vorbestimmten Schwellenwerts bleibt;
**dadurch gekennzeichnet, dass**
- der Schwellenwert eine maximal zulässige Strahlenbelastung auf ein Lebewesen ist,
- die von dem Objekt (155) aufgenommene Strahlungsenergie auf der Basis einer vom Radarsensor (100) abgestrahlten Strahlungsenergie (235) und eines Abstands des Objekts (155) vom Radarsensor (100) bestimmt (235) und mit dem Schwellenwert verglichen (245) wird.

2. Verfahren nach Anspruch 1, wobei die vom Objekt (155) aufgenommene Strahlungsenergie als Mittelwert über eine vorbestimmte Zeitspanne bestimmt (240) wird.

3. Verfahren nach einem der vorangehenden Ansprüche, wobei eine vom Radarsensor (100) abgestrahlte Strahlungsenergie auf der Basis einer in eine Radarantenne (150, 150') eingespeisten Energie und einer Charakteristik der Radarantenne (150, 150') bestimmt (230) wird.

4. Verfahren nach einem der vorangehenden Ansprüche, wobei der Radarsensor (100) mehrere Radarantennen (150, 150') mit teilweise überlappenden Sendebereichen umfasst und die vom Objekt (155) aufgenommene Strahlungsenergie bezüglich aller Radarantennen (150, 150') bestimmt wird.

5. Verfahren nach einem der vorangehenden Ansprüche, wobei die vom Radarsensor (100) abgestrahlte Strahlungsenergie in Abhängigkeit einer Geschwindigkeit des Objekts (155) bezüglich des Radarsensors (100) gesteuert (250) wird.

6. Verfahren nach einem der vorangehenden Ansprüche, wobei die vom Radarsensor (100) abgestrahlte Strahlungsenergie durch Verändern eines Parameters einer vom Radarsensor (100) verwendeten Signalmodulation (135) gesteuert (250) wird.

7. Verfahren nach einem der vorangehenden Ansprüche, wobei der Radarsensor (100) eine steuerbare Radarantenne (150, 150') umfasst und die vom Radarsensor (100) abgestrahlte Strahlungsenergie durch Steuern der Radarantenne (150, 150') gesteuert wird.

8. Computerprogrammprodukt mit Programmcodemitteln zur Durchführung des Verfahrens (200) nach einem der vorangehenden Ansprüche, wenn es auf einer Verarbeitungseinrichtung (110) abläuft.

9. Radarsensor (100), umfassend:
- eine Hochfrequenzquelle (130, 130') zur Erzeugung einer Schwingung;
- eine Radarantenne (150, 150') zum Aussenden elektromagnetischer Strahlung auf der Basis der erzeugten Schwingung und zum Empfangen eines Echos der ausgesandten elektromagnetischen Strahlung;
- eine Steuereinrichtung (110);
- **dadurch gekennzeichnet, dass**
- die Steuereinrichtung (110) dazu eingerichtet ist, die Hochfrequenzquelle (130, 130') und/oder die Radarantenne (150, 150') mittels des Verfahrens (200) nach einem der Ansprüche 1 bis 7 zu steuern.

## Claims

1. Method (200) for controlling a radar sensor (100), comprising the steps of:
- detecting (220) an object (155) by means of the radar sensor (100);
- determining (225) a distance of the object (155) from the radar sensor (100);
- adjusting (250) parameters of the radar sensor (100) which influence the energy of the emitted radar signal in order to control (250) the emitted radiant energy as a function of the determined distance in such a way that a radiant energy of the radar sensor (100) absorbed by the object (155) remains below a predetermined threshold value;
**characterized in that**
- the threshold value is a maximum permissible radiation exposure applied to a living being,
- the radiant energy absorbed by the object (155) is determined (235) on the basis of a radiant energy (235), emitted by the radar sensor (100), and of a distance of the object (155) from the radar sensor (100), and is compared (245) with the threshold value.

2. Method according to Claim 1, in which the radiant energy absorbed by the object (155) is determined (240) as a mean value over a predetermined time period.

3. Method according to one of the preceding claims, in which a radiant energy emitted by the radar sensor (100) is determined (230) on the basis of an energy fed into a radar antenna (150, 150') and a characteristic of the radar antenna (150, 150').

4. Method according to one of the preceding claims, in which the radar sensor (100) comprises a plurality of radar antennas (150, 150') with partially overlapping transmission ranges, and the radiant energy absorbed by the object (155) is determined with reference to all radar antennas (150, 150').

5. Method according to one of the preceding claims, in which the radiant energy emitted by the radar sensor (100) is controlled (250) as a function of a speed of the object (155) with reference to the radar sensor (100).

6. Method according to one of the preceding claims, in which the radiant energy emitted by the radar sensor (100) is controlled (250) by varying a parameter of a signal modulation (135) used by the radar sensor (100).

7. Method according to one of the preceding claims, in which the radar sensor (100) comprises a controllable radar antenna (150, 150'), and the radiant energy emitted by the radar sensor (100) is controlled by controlling the radar antenna (150, 150').

8. Computer program product with program code means for carrying out the method (200) according to one of the preceding claims when it is running on a processing device (110).

9. Radar sensor (100) comprising:
- a high-frequency source (130, 130') for generating an oscillation;
- a radar antenna (150, 150') for emitting electromagnetic radiation on the basis of the generated oscillation and for receiving an echo of the emitted electromagnetic radiation;
- a control device (110);
- **characterized in that**
- the control device (110) is set up to control the high-frequency source (130, 130') and/or the radar antenna (150, 150') by means of the method (200) according to one of Claims 1 to 7.

## Revendications

1. Procédé (200) de commande d'un capteur radar (100), comprenant les étapes suivantes :
- détection (220) d'un objet (155) au moyen du capteur radar (100) ;
- détermination (225) d'une distance de l'objet (155) par rapport au capteur radar (100) ;
- adaptation (250) de paramètres du capteur radar (100) qui ont une influence sur l'énergie du signal radar émis afin de commander (250) l'énergie rayonnante émise en fonction de la distance déterminée de telle sorte qu'une énergie rayonnante du capteur radar (100) absorbée par l'objet (155) reste au-dessous d'une valeur de seuil prédéfinie ;
**caractérisé en ce que**
- la valeur de seuil est une charge de rayonnement maximale admissible sur un être vivant,
- l'énergie rayonnante absorbée par l'objet (155) est déterminée en se basant sur une énergie rayonnante (235) émise par le capteur radar (100) et une distance de l'objet (155) par rapport au capteur radar (100) et comparée (245) avec la valeur de seuil.

2. Procédé.selon la revendication 1, selon lequel l'énergie rayonnante absorbée par l'objet (155) est déterminée (240) en tant que moyenne sur une période prédéfinie.

3. Procédé selon l'une des revendications précédentes, selon lequel une énergie rayonnante émise par le capteur radar (100) est déterminée (230) en se basant sur une énergie injectée dans une antenne de radar (150, 150') et une caractéristique de l'antenne de radar (150, 150').

4. Procédé selon l'une des revendications précédentes, selon lequel le capteur radar (100) comprend plusieurs antennes de radar (150, 150') ayant des plages d'émission qui se chevauchent partiellement et l'énergie rayonnante absorbée par l'objet (155) est déterminée en référence à toutes les antennes de radar (150, 150').

5. Procédé selon l'une des revendications précédentes, selon lequel une énergie rayonnante émise par le capteur radar (100) est commandée (250) en fonction d'une vitesse de l'objet (155) en référence au capteur radar (100).

6. Procédé selon l'une des revendications précédentes, selon lequel une énergie rayonnante émise par le capteur radar (100) est commandée (250) en modifiant un paramètre d'une modulation de signal (135) utilisée par le capteur radar (100).

7. Procédé selon l'une des revendications précédentes, selon lequel le capteur radar (100) comprend une antenne de radar (150, 150') commandable et l'énergie rayonnante émise par le capteur radar (100) est commandée en commandant l'antenne de radar (150, 150').

8. Produit programme informatique comprenant des moyens de code de programme destinés à mettre en oeuvre le procédé (200) selon l'une des revendications précédentes lorsqu'il est exécuté sur un dispositif de traitement (110).

9. Capteur radar (100), comprenant :
- une source de haute fréquence (130, 130') destinée à générer une oscillation ;
- une antenne de radar (150, 150') destinée à émettre un rayonnement électromagnétique sur la base de l'oscillation générée et à recevoir un écho du rayonnement électromagnétique émis ;
- un dispositif de commande (110) ;
- **caractérisé en ce que**
- le dispositif de commande (110) est conçu pour commander la source de haute fréquence (130, 130') et/ou l'antenne de radar (150, 150') au moyen du procédé (200) selon l'une des revendications 1 à 7.
